# EUROPÄISCHE PATENTSCHRIFT

(11) **EP 2 832 574 B1**
(45) Veröffentlichungstag und Bekanntmachung des Hinweises auf die Patenterteilung: **17.02.2016**
(21) Anmeldenummer: 14001124.8
(22) Anmeldetag: 26.03.2014
(51) Int. Cl.: B60K 17/10, B60K 17/356, F16H 61/4192

(54) **Hydrauliksystem mit Schutzfunktion**
Hydraulic system with a protective function
Système hydraulique avec fonction de protection

(30) Priorität: 03.08.2013 DE 102013012984
(43) Veröffentlichungstag der Anmeldung: 04.02.2015
(73) Patentinhaber: MAN Truck & Bus AG, 80995 München (DE)
(72) Erfinder: Beierer, Philipp, 85716 Unterschleißheim (DE); Linke, Ingo, 82194 Gröbenzell (DE); Resch, Franz, 82299 Türkenfeld (DE)

(56) Entgegenhaltungen:
- EP-A2- 1 886 861
- US-A- 3 828 560

## Beschreibung

Die Erfindung betrifft ein Hydrauliksystem für ein Kraftfahrzeug, vorzugsweise ein Nutzfahrzeug, mit einer Pumpe, die mittels einer Antriebsmaschine antreibbar ist, und zumindest einer Funktionseinrichtung, die mit der Pumpe fluidisch verbunden ist.

Hydrauliksysteme für Kraftfahrzeuge mit einer Pumpe und einer oder mehreren Funktionseinrichtungen, die mit der Pumpe fluidisch verbunden sind, sind in unterschiedlichsten Ausführungsformen im Stand der Technik bekannt. So sind z. B. Nutzfahrzeuge mit hydrostatischem Hilfsantrieb, insbesondere sogenannte Einzelradmotoren, bekannt, die für die Wandlung von mechanischer Energie zu hydraulischer Energie eine Konstant-Pumpe einsetzen. Dabei ist bei aktiviertem Hilfsantrieb die Drehzahl der Konstant-Pumpe in einem gleichbleibenden Verhältnis mit der Drehzahl einer Hinterachse des Nutzfahrzeugs gekoppelt. Konstruktionsbedingt ist die erlaubte Drehzahl der Konstant-Pumpe auf einen maximalen Wert begrenzt. Entsprechend ergibt sich somit eine maximale Fahrgeschwindigkeit, bis zu welcher der hydrostatische Hilfsantrieb aktiv eingesetzt werden kann. Die Zu- und Abschaltung des hydrostatischen Hilfsantriebs erfolgt in der Regel über eine schaltbare Kupplung. In der Praxis kann es durch verschiedene Fehlerquellen zu einer unerlaubten Überdrehzahl der Konstant-Pumpe kommen. Beispielhaft sind folgende Ursachen genannt:
- Fehlfunktion eines Steuerventils (Ventil bleibt z. B. hängen, schaltet nicht, schaltet eigenständig, etc.),
- Funktionsstörung einer schaltbaren Kupplung,
- mechanische defekte Lagerung und/oder Anbindung der Konstant-Pumpe,
- Softwarefehler in der Systemsteuerung,
- Fremdstoffkontamination im Ölkreislauf durch Schmutzeintrag (kann z. B. zu Ventilschaden führen).

Bei Pumpenüberdrehzahl kann es zu einer mechanischen Überlastung der Konstant-Pumpe kommen. Das Schadensbild reicht dabei von plastischer Verformung bis zum Bruch oder der Zerstörung einzelner Komponenten der Pumpe, insbesondere der Konstant-Pumpe. Dabei können Partikel (z. B. Kleinteile, Bruchelemente, etc.) entstehen und durch den Ölstrom im gesamten Hydrauliksystem verteilt werden. Folglich ist nicht nur die Pumpe selbst von dem Pumpenschaden betroffen, sondern auch mit der Pumpe fluidisch verbundene Funktionseinrichtungen, wie z. B. der hydrostatische Hilfsantrieb, Ventile, Leitungen, Kühler, etc.. Der Reparaturaufwand eines solchen Schadens, insbesondere verbunden mit den Folgeschäden, ist entsprechend hoch und kostspielig.

Im Stand der Technik sind ebenfalls Hydrauliksysteme mit einer Verstell-Pumpe bekannt, die an die Drehzahl des Antriebsmotors des Kraftfahrzeugs entweder direkt oder indirekt über ein Getriebe gekoppelt ist. Dabei ist es üblich, dass die Verstell-Pumpe dauerhaft mit dem Antriebsmotor verbunden ist, das heißt, die Verstell-Pumpe synchron mit dem Antriebsmotor betrieben wird. Für Fahrzustände, bei denen keine Unterstützung des hydrostatischen Hilfsantriebs erforderlich ist, wird der Schwenkwinkel der Verstell-Pumpe auf "Nullförderung" reduziert, das heißt, die Verstell-Pumpe dreht sich zwar, aber es wird kein oder nur ein minimaler Volumenstrom gefördert. Durch den ständigen Betrieb der Verstell-Pumpe ist davon auszugehen, dass deren Lebensdauer selbst bei im Wesentlichen lastlosem Umlauf (z. B. hydrostatischer Hilfsantrieb deaktiviert) reduziert wird. Somit ergibt sich für das Kraftfahrzeug eine Verschlechterung der Systemverfügbarkeit, auch dann, wenn der Fahrzeugführer primär ohne hydrostatischen Hilfsantrieb fährt. Ein Schaden an der Verstell-Pumpe ist bezogen auf die Gesamtkosten des hydrostatischen Hilfsantriebs von großer Bedeutung. Üblicherweise sind in der Verstell-Pumpe eine Speisepumpe und ein oder mehrere Proportionalventile integriert, die die Ersatzteilkosten entsprechend in die Höhe treiben.

US 3828560 A offenbart ein Hydrauliksystem gemäß dem Oberbegriff des Anspruchs 1.

Eine Aufgabe der Erfindung ist es, ein Hydrauliksystem für ein Kraftfahrzeug zu schaffen, dessen Funktionseinrichtung, insbesondere ein hydrostatischer Hilfsantrieb, und/oder dessen Pumpe vor einer wie zuvor beschriebenen Gefahr geschützt werden kann.

Diese Aufgabe kann mit den Merkmalen des Hauptanspruchs gelöst werden. Vorteilhafte Weiterbildungen der Erfindung können den Unteransprüchen und der folgenden Beschreibung entnommen werden.

Die Erfindung schafft ein Hydrauliksystem für ein Kraftfahrzeug, nämlich ein Nutzfahrzeug, z. B. einen Lastkraftwagen oder einen Omnibus. Das Hydrauliksystem umfasst eine zweckmäßig hydraulische Pumpe und eine oder mehrere Funktionseinrichtungen, die mit der Pumpe fluidisch verbunden sind, insbesondere von der Pumpe fluidisch antreibbar sind, und zweckmäßig stromabwärts der Pumpe angeordnet sind. Die Pumpe ist z. B. mittels einer Antriebsmaschine antreibbar, vorzugsweise der Antriebsmaschine (z. B. ein Verbrennungsmotor) zum Antreiben des Kraftfahrzeugs.

Erfindungsgemäß wird eine eine Schutzkupplung aufweisende Schutzkonfiguration vorgesehen, die zum Schutz insbesondere der Pumpe und/oder der zumindest einen Funktionseinrichtung dient.

Das Hydrauliksystem zeichnet sich somit insbesondere dadurch aus, dass die Pumpe und/oder die Funktionseinrichtung mittels der Schutzkupplung geschützt werden.

Im Rahmen der Erfindung ist die Schutzkupplung vorzugsweise der Pumpe und/oder dem Hydrauliksystem mittelbar oder unmittelbar antriebsbezogen vorgeschaltet.

Im Rahmen der Erfindung kann insbesondere zwischen den zwei nachfolgend beschriebenen Ausführungsformen unterschieden werden.

In einer ersten Ausführungsform ist die Pumpe zweckmäßig als Konstant-Pumpe ausgeführt, z. B. mit einem im Betrieb konstanten Verdrängervolumen. Die Pumpe kann z. B. mit oder ohne manuell adaptierbarem konstanten Verdrängervolumen ausgeführt sein. Die Drehzahl der Pumpe weist vorzugsweise eine zu der Drehzahl einer Hinterachse des Kraftfahrzeugs gleichbleibende Übersetzung auf.

Die Schutzkupplung dient dazu, die Pumpe und somit zweckmäßig die Funktionseinrichtung von der Antriebsmaschine vorzugsweise dauerhaft zu entkoppeln und/oder im entkoppelten Zustand zu blockieren, wenn die Drehzahl der Pumpe eine Grenzdrehzahl erreicht oder überschreitet. Damit sind im Rahmen der Erfindung zweckmäßig auch Ausführungsformen umfasst, in denen die Pumpe und somit vorzugsweise die Funktionseinrichtung von der Antriebsmaschine insbesondere dauerhaft entkoppelt und/oder im entkoppelten Zustand blockiert wird, wenn der Druck oder Druckgradient stromabwärts der Pumpe einen Grenzdruck oder Grenzdruckgradienten erreicht oder überschreitet; und/oder wenn der Volumenstrom stromabwärts der Pumpe einen Grenzvolumenstrom erreicht oder überschreitet. Dadurch kann die Pumpe und somit zweckmäßig die Funktionseinrichtung vor der Auswirkung eines Schadens an und/oder in der Pumpe geschützt werden, der auf eine unzulässige Überdrehzahl der Pumpe zurückgeführt werden kann, die wiederum z. B. aus einem unzulässigen Überdruck, Überdruckgradienten und/oder Übervolumenstrom herleitbar ist. Die Erfassung, mittels eines geeigneten Erfassungsmittels, des Drucks, Druckgradientens und/oder Volumenstroms kann somit zweckmäßig quasi als Erfassungsgröße dienen, um auf die Drehzahl, insbesondere eine unzulässige Überdrehzahl der Pumpe zu erfassen oder auf eine solche schließen zu können.

Es ist möglich, dass der Druck, der Druckgradient und/oder der Volumenstrom mittels eines geeigneten Erfassungsmittels z. B. mechanisch und/oder elektronisch erfasst werden, um insbesondere auf eine Drehzahl der Pumpe schließen zu können.

Die Schutzkonfiguration kann insbesondere so ausgeführt sein, dass sie nach Erfüllung des Sicherheitskriteriums (Grenzdrehzahl, Grenzdruck, Grenzdruckgradient und/oder Grenzvolumenstrom) hydro-mechanisch zweckmäßig direkt auf die Schutzkupplung wirkt.

Ferner kann die Schutzkonfiguration vorzugsweise so ausgeführt sein, dass sie nach Erfüllung des Sicherheitskriteriums z. B. indirekt über eine elektronische Steuereinheit elektro-mechanisch auf einen Aktuator der Schutzkupplung wirkt.

Die Schutzkupplung ist einer Schaltkupplung unmittelbar oder mittelbar nachgeschaltet. Die Schaltkupplung dient dazu, die Pumpe antriebsbezogen wahlweise mit der Antriebsmaschine zu verbinden oder von der Antriebsmaschine zu trennen.

Die Schutzkonfiguration kann z. B. eine Erfassungseinheit zur Erfassung der Drehzahl der Pumpe und eine elektronische Steuereinheit zum Durchführen eines Vergleichs zwischen der erfassten Drehzahl und einer Grenzdrehzahl aufweisen, auf Basis dessen die Schutzkupplung zweckmäßig aktiviert werden kann.

Die Erfassungseinheit kann z. B. die Drehzahl der Pumpe an der Pumpenwelle erfassen und/oder zumindest teilweise an der Pumpenwelle montiert sein.

Die Erfassungseinheit ist vorzugsweise so ausgeführt, dass sie die Drehzahl der Pumpe kontinuierlich erfasst und vorzugsweise kontinuierlich an die Steuereinheit kommuniziert.

In einer zweiten Ausführungsform ist die Pumpe zweckmäßig als Verstell-Pumpe ausgeführt, z. B. mit einem im Betrieb verstellbaren Schluckvolumen. Die Drehzahl der Pumpe weist vorzugsweise ein zu der Drehzahl der Antriebsmaschine gleichbleibendes Verhältnis auf.

Die Schutzkupplung dient insbesondere dazu, bei Nichtgebrauch der Funktionseinrichtung die Verstell-Pumpe und somit zweckmäßig die Funktionseinrichtung von der Antriebsmaschine zu entkoppeln und/oder im entkoppelten Zustand zu blockieren, um zweckmäßig ein Drehen - quasi Leer-/Dauerdrehen - der Pumpe mit zumindest nahezu Nullförderung und/oder trotz Nichtgebrauch der Funktionseinrichtung zu verhindern. Die Schutzkupplung dient somit insbesondere dazu, die Pumpe antriebsbezogen wahlweise mit der Antriebsmaschine zu verbinden oder von der Antriebsmaschine zu trennen. Dadurch kann insbesondere ermöglicht werden, dass im Gegensatz zum Stand der Technik die Verstell-Pumpe nicht mehr dauer-synchron mit der Antriebsmaschine betrieben wird. Dadurch kann ein Schaden des Hydrauliksystems, insbesondere der Pumpe und/oder der Funktionseinrichtung durch unnötigen Dauereinsatz der Pumpe, z. B. unnötiges Leer-/Dauerdrehen, verhindert werden.

Die Schutzkupplung dient im Rahmen der Erfindung also insbesondere dazu, einen Schaden am Hydrauliksystem, insbesondere der Pumpe und/oder der Funktionseinrichtung durch unzulässige Pumpen-Überdrehzahl und/oder unnötigen Pumpen-Dauereinsatz zu vermeiden.

Die Schutzkupplung kann an eine Schnittstelle der Antriebsmaschine angekoppelt sein.

Es ist möglich, dass die Schutzkupplung antriebsbezogen zwischen der Antriebsmaschine und der Pumpe angeordnet ist, benachbart zu der Pumpe angeordnet ist und/oder der Pumpe und/oder dem Hydrauliksystem mittelbar oder unmittelbar vorgeschaltet ist.

Die Funktionseinrichtung ist insbesondere als z. B. hydrostatischer Hilfsantrieb ausgeführt, vorzugsweise für eine Vorderachse, Nachlaufachse und/oder Vorlaufachse des Kraftfahrzeugs. Der hydrostatische Hilfsantrieb umfasst vorzugsweise Einzelradmotoren (z. B. Hydraulikmotoren) oder ist so ausgeführt, dass er über eine mechanische Antriebswelle zumindest zwei Fahrzeugräder antreibt.

Die Übersetzung oder das Verhältnis der Drehzahl einer Hinterachse des Kraftfahrzeugs zu der Drehzahl der Pumpe (Konstant- oder Verstell-Pumpe) ist vorzugsweise gleichbleibend, wenn der hydrostatische Hilfsantrieb aktiviert ist. Bei der Konstant-Pumpe ist somit das Verhältnis von Drehzahl zu Fördervolumen zweckmäßig konstant. Bei der Verstell-Pumpe kann das Verhältnis von Drehzahl zu Fördervolumen verändert werden.

Die Übersetzung oder das Verhältnis der Drehzahl der Antriebsmaschine des Kraftfahrzeugs zu der Drehzahl der Pumpe (Verstell-Pumpe) ist vorzugsweise gleichbleibend, wenn der Hilfsantrieb aktiviert ist.

Es ist möglich, dass eine Aktuatoreinrichtung zur mechanischen, pneumatischen oder elektro-mechanischen Betätigung der Schutzkupplung bereitgestellt ist. Die Aktuatoreinrichtung kann zweckmäßig mittels der elektronischen Steuereinheit angesteuert werden, z. B. über ein optionales pneumatisches Steuerventil.

Bei einer bevorzugten Ausführungsform der Erfindung ist die Schutzkupplung so ausgeführt, dass sie rein mechanisch, insbesondere ohne zusätzliche Aktuatoreinrichtung, bei Überschreiten einer unzulässigen Grenzdrehzahl auslöst und die Pumpe zweckmäßig dauerhaft von der Antriebsmaschine trennt.

Es ist möglich, dass ein Auslösen der Schutzkupplung elektronisch erfasst und an die elektronische Steuereinheit gemeldet wird.

Die Schutzkonfiguration kann ferner so ausgeführt sein, dass dem Fahrzeugführer, z. B. mittels eines Displays und/oder eines Lautsprechers mitgeteilt wird, dass die Schutzkupplung ausgelöst ist.

Die Schutzkupplung im Rahmen der Erfindung dient insbesondere dazu, die Pumpe von der Antriebsmaschine Pumpen-drehzahlabhängig abzukoppeln.

Zu erwähnen ist ferner, dass die Antriebsmaschine, mittels der die Pumpe zweckmäßig antreibbar ist, vorzugsweise der Antriebsmaschine (z. B. ein Verbrennungsmotor) zum Antreiben des Kraftfahrzeugs entspricht. Die Antriebsmaschine dient also vorzugsweise zum Antreiben des Kraftfahrzeugs und zum Antreiben der Pumpe.

Zu erwähnen ist außerdem, dass die Pumpe vorzugsweise als Hochdruck-Pumpe ausgeführt ist.

Die Erfindung umfasst auch ein Nutzfahrzeug, z. B. einen Lastkraftwagen oder einen Omnibus, mit einem Hydrauliksystem wie hierin beschrieben.

Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt einen Schaltplan eines Hydrauliksystems gemäß einer Ausführungsform der Erfindung,
- Figur 2: zeigt einen Schaltplan eines Hydrauliksystems gemäß einer anderen Ausführungsform der Erfindung und
- Figur 3: zeigt einen Schaltplan eines Hydrauliksystems gemäß einer noch anderen Ausführungsform der Erfindung.

Die in den Figuren gezeigten Ausführungsformen stimmen teilweise überein, wobei ähnliche oder identische Teile mit den gleichen Bezugszeichen versehen sind und zu deren Erläuterung auch auf die Beschreibung der anderen Ausführungsformen verwiesen wird, um Wiederholungen zu vermeiden.

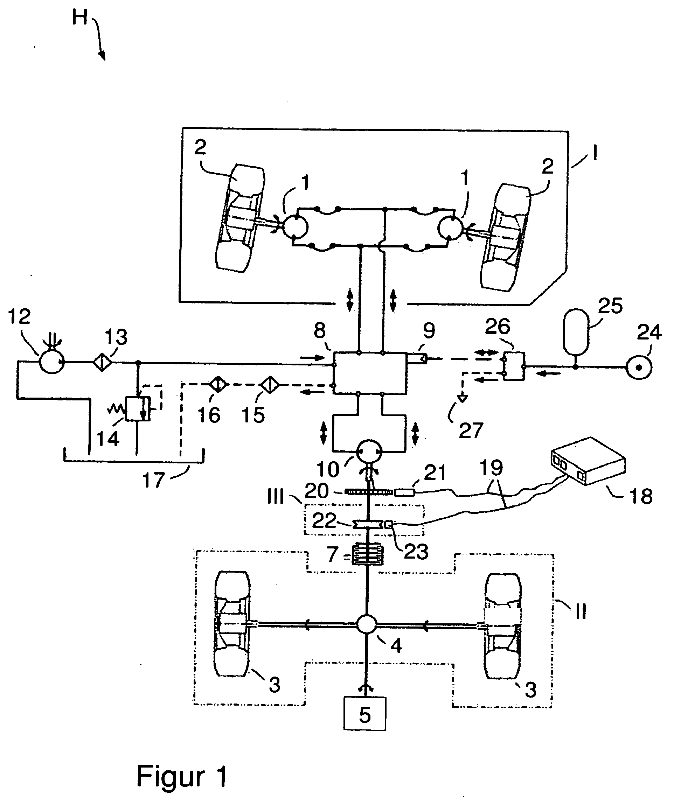

Figur 1 zeigt eine schematische Darstellung eines Hydrauliksystems H für ein Kraftfahrzeug, insbesondere Nutzfahrzeug, gemäß einer Ausführungsform der Erfindung. Figur 1 betrifft eine Ausführungsform mit einer Konstant-Pumpe 10, die ein im Betrieb konstantes Verdrängervolumen aufweist und mittels einer Antriebsmaschine 5 zum Antreiben des Kraftfahrzeugs antreibbar ist, und einer Schutz-/Sicherheitskupplung 22, die die Pumpe 10 bei Überschreiten einer Grenzdrehzahl zweckmäßig dauerhaft von der Antriebsmaschine 5 entkoppelt, um einen durch eine Pumpenüberdrehzahl verursachten Schaden an oder in der Pumpe 10 und einen in der Folge z. B. durch Partikelkontamination (z. B. Bruchteile, Kleinteile, etc.) verursachten Schaden an einem hydrostatischen Hilfsantrieb 1 für das Kraftfahrzeug zu vermeiden.

Das Hydrauliksystem H umfasst einen Vorderachsaufbau I des Kraftfahrzeugs. Der Vorderachsaufbau I umfasst eine lenkbare Achse mit Radeinheiten 2 und umkehrbaren Hydraulikmotoren für die Radeinheiten 2. Die Hydraulikmotoren stellen den hydrostatischen Hilfsantrieb 1 dar, sind als sogenannte Einzelradmotoren ausgeführt und können insbesondere als Anfahrhilfe und/oder Bremshilfe für das Kraftfahrzeug dienen.

Figur 1 zeigt ferner einen Hinterachsaufbau II. Der Hinterachsaufbau II umfasst eine mechanisch angetriebene Hinterachse, ein Differenzial bzw. Getriebe 4 mit Antriebswelle und Radeinheiten 3.

Figur 1 zeigt des Weiteren eine die Schutzkupplung 22 aufweisende Schutzkonfiguration III zum Schutz der Pumpe 10 und insbesondere des Hilfsantriebs 1. Die Schutzkupplung 22 ist der Pumpe 10 antriebsbezogen vorgeschaltet.

Die Pumpe 10 ist antriebsbezogen zwischen dem Vorderachsaufbau I und dem Hinterachsaufbau II angeordnet. Die Pumpe 10 dient dazu, die Hydraulikmotoren des Hilfsantriebs 1 fluidisch mittels eines Arbeitsfluids (z. B. Öl) anzutreiben. Im Umkehrbetrieb, das heißt bei einem Bremsvorgang, können die Hydraulikmotoren als Pumpen und die Pumpe 10 als hydraulischer Motor betrieben werden. Die Pumpe 10 ist zwar wie erwähnt als Konstant-Pumpe mit im Betrieb konstantem Schluckvolumen ausgeführt, das allerdings optional vor Betrieb der Pumpe 10 veränderbar eingestellt werden kann.

An die Pumpe 10 ist nicht nur der Hilfsantrieb 1 angeschlossen, sondern über eine Steuereinheit (Ventilblock) 8 mit hydraulischen Steuer- und/oder Regelventilen auch weitere, zweckmäßig in zumindest einem zusätzlichen hydraulischen Kreislauf aufgenommene Funktionseinrichtungen, z. B. eine Speisepumpe 12 (bei geschlossenem Hauptkreis notwendig), ein Niederdruckfilter 13, ein Druckbegrenzungsventil 14, ein Rücklauffilter 15, ein Wärmetauscher bzw. Kühler 16 und ein Ölbehälter 17.

Die Steuereinheit 8 kann zudem über eine z. B. pneumatisch betätigbare Vorsteuereinheit 9 mit einer zweckmäßig pneumatischen Druckquelle 24, einem optionalen Druckspeicher 25 und einem zweckmäßig pneumatischem Steuerventil 26 verbunden sein, das eine Entlüftung 27 aufweisen kann.

Der Schutzkupplung 22 ist eine Schaltkupplung 7 vorgeschaltet, die dazu dient, die Pumpe 10 antriebsbezogen wahlweise mit der Antriebsmaschine 5 zu verbinden oder von der Antriebsmaschine 5 zu trennen.

Die Schutzkupplung 22 ist so ausgeführt, dass sie die Pumpe 10 von der Antriebsmaschine 5 quasi dauer-entkoppelt und/oder im dauer-entkoppelten Zustand blockiert, wenn die Drehzahl der Pumpe 10 eine Grenzdrehzahl erreicht oder überschreitet. Die Schutzkupplung 22 ist somit zweckmäßig ausgeführt, eine Permanent-Trennung zwischen Pumpe 10 und Antriebsmaschine 5 zu schaffen.

Dazu kann die Schutzkonfiguration eine Erfassungseinheit 20, 21 zur Erfassung der Drehzahl der Pumpe 10 und eine elektronische Steuereinheit 18 zum Durchführen eines Vergleichs zwischen der erfassten Drehzahl und einer Grenzdrehzahl aufweisen. Die Erfassungseinheit 20, 21 erfasst die Drehzahl der Pumpe 10 an der Pumpenwelle und ist zumindest teilweise an der Pumpenwelle montiert. Die Erfassungseinheit 20, 21 weist einen an der Pumpenwelle der Pumpe 10 montierten Drehzahlsignalgeber 20 und ein elektronisches Sensorelement 21 auf, das zur Erfassung der von dem Drehsignalgeber 20 kommenden Signale dient. Die Steuereinheit 18 ist über elektrische Signalleitungen 19 einerseits mit dem Sensorelement 21 verbunden und andererseits mit einem z. B. mechanischen oder elektromagnetischen Aktuator 23 zum Betätigen, insbesondere Auslösen der Schutzkupplung 22.

Die Pumpendrehzahl-abhängige Zwangstrennung der Pumpe 10 von der Antriebsmaschine 5 dient nicht nur zum Schutz der Pumpe 10 und des Hilfsantriebs 1, sondern ebenso zum Schutz weiterer Funktionseinrichtungen des Hydrauliksystems H, z. B. der Hydraulikleitungen, der Speisepumpe 12, dem Niederdruckfilter 13, dem Druckbegrenzungsventil 14, dem Rücklauffilter 15, dem Wärmetauscher bzw. dem Kühler 16, dem Ölbehälter 17, etc, die durch Partikelkontamination (z. B. Bruchteile, Kleinteile, etc.) beschädigt werden könnten.

Falls die Schutzkupplung 22 auf Grund einer Überlast im hydrostatischen Betrieb öffnet, kann im elektrischen Steuergerät 18 eine Fehlermeldung hinterlegt werden. Je nach Schwere des Fehlers, der z. B. durch unterschiedlich definierte Grenzwerte bestimmt werden kann, bekommt der Fahrzeugführer eine Meldung in einem Fahrzeugdisplay angezeigt, z. B. mit dem Hinweis, dass eine Servicewerkstatt aufzusuchen ist. Die Servicewerkstatt kann dann mit Hilfe eines hinterlegten Fehlercodes gezielt das Hydrauliksystem H inspizieren und gegebenenfalls defekte Komponenten tauschen oder instandsetzen.

Das in Figur 1 gezeigte Hydrauliksystem H basiert auf einer gleichbleibenden Übersetzung der Drehzahl einer Hinterachse des Kraftfahrzeugs zu der Drehzahl der Pumpe 10.

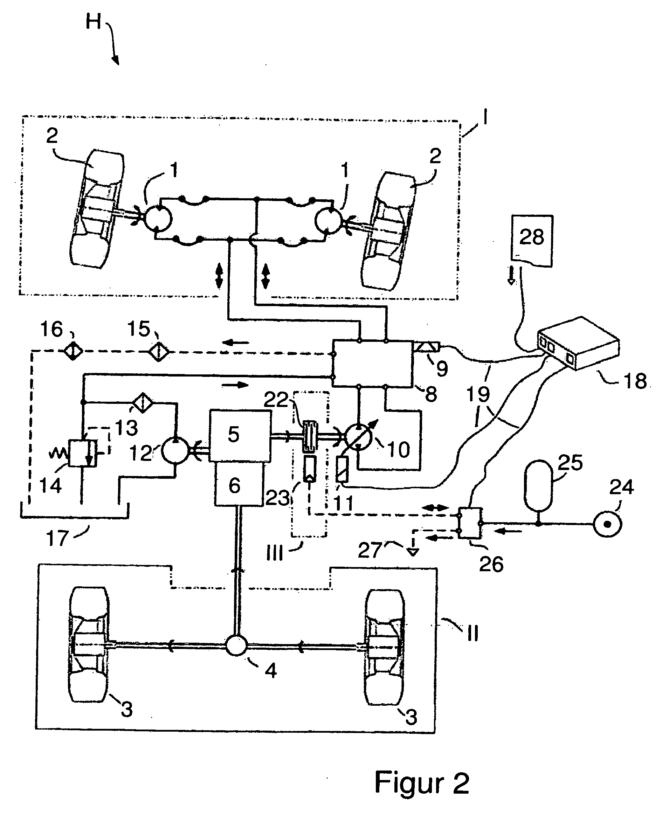

Figur 2 zeigt ein Hydrauliksystem H gemäß einer anderen Ausführungsform der Erfindung. Figur 2 betrifft eine Ausführungsform mit einer Verstell-Pumpe 10 mit einem im Betrieb verstellbaren Schluckvolumen, die z. B. direkt oder indirekt über ein Getriebe an die Drehzahl der Antriebsmaschine 5 gekoppelt ist.

Eine Besonderheit der in der Figur 2 gezeigten Ausführungsform ist, dass entgegen dem Stand der Technik die Verstell-Pumpe 10 nicht permanent-synchron mit der Antriebsmaschine 5 betrieben wird, sondern eine Schutzkupplung 22 zwischen der Antriebsmaschine 5 und der Pumpe 10 angeordnet ist. Die Sicherheitskupplung 22 dient dazu, die Pumpe 10 bei Nichtgebrauch des Hilfsantriebs 1 physisch von der Antriebsmaschine 5 zu entkoppeln und somit ein Leer- oder Dauerdrehen der Pumpe 10 zu verhindern. Dadurch kann die Betriebszeit der Pumpe 10 auf ein Minimum reduziert werden und die Pumpe 10 vor Langzeitschäden geschützt werden. Zugleich dient die Schutzkupplung 22 dazu, die Pumpe 10 antriebsbezogen wahlweise mit der Antriebsmaschine 5 zu verbinden oder von der Antriebsmaschine 5 zu trennen.

Die Schutzkupplung 22 ist zweckmäßig an eine Schnittstelle der Antriebsmaschine 5 montiert.

Die in Figur 2 gezeigte Steuereinheit 18 ist über eine zweckmäßig elektro-mechanisch betätigbare Vorsteuereinheit 9 mit der Steuereinheit (Ventilblock) 8 verbunden, über ein zweckmäßig pneumatisches Ventil 26 und einen z. B. mechanischen oder elektro-mechanischen Aktuator 23 mit der Schutzkupplung 22 verbunden und über eine z. B. elektro-mechanisch betätigbare Vorsteuereinheit 11 mit der Pumpe 10 verbunden.

Bezugszeichen 28 kennzeichnet Hydrauliksystem- und/oder Fahrzeug-spezifische der Steuereinheit 18 zusätzlich bereitstellbare Signale (z. B. Geschwindigkeit, Druck, Temperatur, etc.), während Bezugszeichen 6 ein z. B. manuelles oder automatischen Schaltgetriebe kennzeichnet.

Das in Figur 2 gezeigte Hydrauliksystem H basiert auf einem gleichbleibenden Verhältnis der Drehzahl der Pumpe 10 zu der Drehzahl der Antriebsmaschine 5 zum Antreiben des Kraftfahrzeugs, insbesondere wenn der Hilfsantrieb 1 aktiviert ist.

Die Steuerung der Schutzkupplung 22 kann sowohl bei der Ausführungsform gemäß Figur 1 als auch bei der Ausführungsform gemäß Figur 2 in die elektronische Steuereinheit des hydrostatischen Hilfsantriebs 1 integriert sein. Die Aktivierung oder Deaktivierung der Schutzkupplung 22 kann zweckmäßig in Abstimmung mit dem Betriebszustand des Kraftfahrzeugs erfolgen. Denkbar ist z. B., dass die Schutzkupplung 22 bevorzugt bei minimaler Last einen Kraft- oder Formschluss zwischen Antriebsmaschine 5 und Pumpe 10 herstellt. Das Öffnen der Schutzkupplung 22 kann neben dem allgemeinen Deaktivierungsvorgang bei Nichtgebrauch des Hilfsantriebs 1 auch erfolgen, um z. B. das hydraulische System oder aber die Antriebsmaschine 5 selbst vor unzulässigen oder ungewollten Lastzuständen zu schützen.

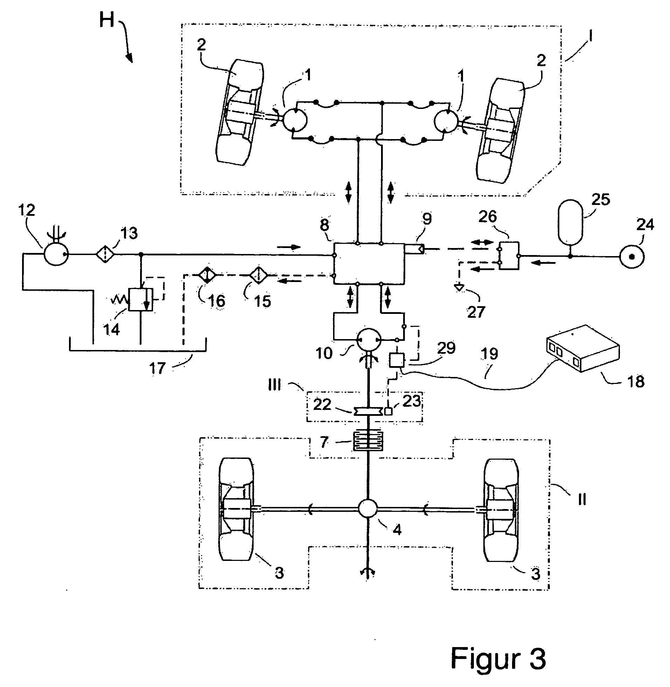

Figur 3 zeigt einen Schaltplan eines Hydrauliksystems H gemäß einer anderen Ausführungsform der Erfindung.

Eine Besonderheit des in Figur 3 gezeigten Hydrauliksystems H ist, dass die Schutzkonfiguration III eine Erfassungs- und/oder Steuervorrichtung 29 umfasst, die so ausgeführt ist, dass sie einen Druck, Druckgradienten und/oder Volumenstrom stromabwärts der Pumpe 10 erfasst, um daraus auf eine Drehzahl der Pumpe 10 schließen zu können. Das Erfassen kann mechanisch und/oder elektronisch erfolgen.

Die Schutzkonfiguration III kann so ausgeführt sein, dass sie nach Erfüllung des Sicherheitskriteriums, d. h. nach Erfassung einer Grenzdrehzahl, eines Grenzdrucks, eines Grenzdruckgradienten und/oder eines Grenzvolumenstroms, hydro-mechanisch direkt auf die Schutzkupplung 22 wirkt. Alternativ kann die Schutzkonfiguration III so ausgeführt sein, dass sie nach Erfüllung des Sicherheitskriteriums indirekt über eine elektronische Steuereinheit 18 elektro-mechanisch auf die Aktuatoreinrichtung 23 der Schutzkupplung 22 wirkt.

Zu erwähnen ist noch, dass die Auslösung der Schutzkupplung 22 z. B. über eine pneumatische Aktuatoreinrichtung erfolgen kann oder mechanisch in der Schutzkupplung 22 selbst, z. B. mittels Überschreitung einer vordefinierten Kraft. Ein z. B. elektronisches Sensorelement kann das bedarfsabhängig erfassen und an eine elektronische Steuereinheit übermitteln.

### Bezugszeichenliste

- 1: Hilfsantrieb, insbesondere Hydraulikmotor(en), umkehrbar
- 2: Radeinheit, lenkbar
- 3: Radeinheit, mechanisch angetrieben
- 4: Differential bzw. Getriebe mit Antriebswelle
- 5: Antriebsmaschine, z. B. Verbrennungsmotor
- 6: Schaltgetriebe, manuell oder automatisch
- 7: Schaltkupplung
- 8: Steuereinheit (Ventilblock) mit hydraulischen Steuer- und Regelventilen
- 9: Vorsteuereinheit, pneumatisch oder elektro-mechanisch betätigbar
- 10: Hydraulische Pumpe, umkehrbar, konstantes/variables Schluckvolumen
- 11: Vorsteuereinheit, elektro-mechanisch betätigbar
- 12: Speisepumpe (bei geschlossenem Hauptkreis notwendig)
- 13: Niederdruckfilter
- 14: Druckbegrenzungsventil
- 15: Rücklauffilter
- 16: Wärmetauscher bzw. Kühler
- 17: Ölbehälter
- 18: Steuereinheit
- 19: Signalleitung, elektrisch
- 20: Drehzahlsignalgeber
- 21: Sensorelement, elektronisch
- 22: Schutz-/Sicherheitskupplung
- 23: Aktuator (mechanisch, hydro-mechanisch, elektro-magnetisch)
- 24: Druckquelle, pneumatisch
- 25: Druckspeicher (optional)
- 26: Steuerventil, pneumatisch
- 27: Entlüftung
- 28: Zusätzliche Signale (system-/fahrzeugspezifisch)
- 29: Steuer- und/oder Erfassungsvorrichtung, zweckmäßig mit elektronischem Sensorelement und/oder hydraulisch-mechanischer Rückkopplung
- H: Hydrauliksystem
- I: Lenkbare Achse mit hydrostatischem Hilfsantrieb
- II: Mechanisch angetriebener Hinterachsaufbau
- III: Schutz-/Sicherheitskonfiguration

## Patentansprüche

1. Hydrauliksystem (H) für ein Kraftfahrzeug, nämlich Nutzfahrzeug, mit einer Pumpe (10), die mittels einer Antriebsmaschine (5) antreibbar ist, und zumindest einer Funktionseinrichtung (1), die mit der Pumpe (10) fluidisch verbunden ist, wobei eine eine Schutzkupplung (22) umfassende Schutzkonfiguration (III) zum Schutz der Pumpe (10) und/oder der Funktionseinrichtung (1) bereitgestellt ist, **dadurch gekennzeichnet, dass** die Schutzkupplung (22) die Pumpe (10) von der Antriebsmaschine (5) entkoppelt und/oder im entkoppelten Zustand blockiert, wenn die Drehzahl der Pumpe (10) eine Grenzdrehzahl erreicht oder überschreitet, und die Schutzkupplung (22) einer Schaltkupplung (7) nachgeschaltet ist, die dazu dient, die Pumpe (10) wahlweise mit der Antriebsmaschine (5) zu verbinden oder von der Antriebsmaschine (5) zu trennen.

2. Hydrauliksystem (H) nach Anspruch 1, **dadurch gekennzeichnet, dass** die Pumpe (10) als Konstant-Pumpe ausgeführt ist, nämlich mit einem im Betrieb konstanten Verdrängervolumen.

3. Hydrauliksystem (H) nach einem der vorhergehenden Ansprüche, **dadurch gekennzeichnet, dass** die Schutzkonfiguration eine Erfassungseinheit (20) zur Erfassung der Drehzahl der Pumpe (10) und eine elektronische Steuereinheit (18) zum Durchführen eines Vergleichs zwischen der erfassten Drehzahl und einer Grenzdrehzahl aufweist.

4. Hydrauliksystem (H) nach Anspruch 3, **dadurch gekennzeichnet, dass** die Erfassungseinheit (20) die Drehzahl der Pumpe (10) an der Pumpenwelle erfasst und/oder zumindest teilweise an der Pumpenwelle montiert ist.

5. Hydrauliksystem (H) nach Anspruch 3 oder 4, **dadurch gekennzeichnet, dass** die Erfassungseinheit (20) ausgeführt ist, die Drehzahl der Pumpe (10) kontinuierlich zu erfassen und kontinuierlich an die Steuereinheit (18) zu kommunizieren.

6. Hydrauliksystem (H) nach einem der Ansprüche 1 bis 5, **dadurch gekennzeichnet, dass** die Schutzkonfiguration (III) eine Erfassungs- und/oder Steuervorrichtung (29) umfasst, die dazu dient, einen Druck, Druckgradienten und/oder Volumenstrom stromabwärts der Pumpe (10) zu erfassen, um auf eine Drehzahl der Pumpe (10) schließen zu können.

7. Hydrauliksystem (H) nach Anspruch 6, **dadurch gekennzeichnet, dass** der Druck, der Druckgradient und/oder der Volumenstrom mechanisch und/oder elektronisch erfasst werden.

8. Hydrauliksystem (H) nach einem der vorhergehenden Ansprüche, **dadurch gekennzeichnet, dass** die Schutzkonfiguration (III) so ausgeführt ist, dass sie nach Erfüllung des Sicherheitskriteriums hydro-mechanisch direkt auf die Schutzkupplung (22) wirkt.

9. Hydrauliksystem (H) nach einem der Ansprüche 1 bis 7, **dadurch gekennzeichnet, dass** die Schutzkonfiguration (III) so ausgeführt ist, dass sie nach Erfüllung des Sicherheitskriteriums indirekt über eine elektronische Steuereinheit (18) elektro-mechanisch auf einen Aktuator (23) der Schutzkupplung (22) wirkt.

10. Hydrauliksystem (H) nach Anspruch 1 oder einem der Ansprüche 3 bis 9, **dadurch gekennzeichnet, dass** die Pumpe (10) als Verstell-Pumpe ausgeführt ist, mit einem im Betrieb verstellbaren Schluckvolumen.

11. Hydrauliksystem (H) nach Anspruch 10, **dadurch gekennzeichnet, dass** die Schutzkupplung (22) bei Nichtgebrauch der Funktionseinrichtung (1) die Pumpe (10) von der Antriebsmaschine (5) entkoppelt und/oder im entkoppelten Zustand blockiert, um ein Drehen der Pumpe (10) mit zumindest nahezu Nullförderung und/oder trotz Nichtgebrauch der Funktionseinrichtung (1) zu verhindern.

12. Hydrauliksystem (H) nach Anspruch 10 oder 11, **dadurch gekennzeichnet, dass** die Pumpe (10) an eine Schnittstelle der Antriebsmaschine (5) angekoppelt ist.

13. Hydrauliksystem (H) nach einem der vorhergehenden Ansprüche, **dadurch gekennzeichnet, dass** die Schutzkupplung (22) der Pumpe (10) und/oder dem Hydrauliksystem (H) vorgeschaltet ist.

14. Hydrauliksystem (H) nach einem der vorhergehenden Ansprüche, **dadurch gekennzeichnet, dass** die Schutzkupplung (22) zwischen der Antriebsmaschine (5) und der Pumpe (10) angeordnet ist.

15. Hydrauliksystem (H) nach einem der vorhergehenden Ansprüche, **dadurch gekennzeichnet, dass** die Funktionseinrichtung einen Hilfsantrieb (1) für das Kraftfahrzeug umfasst, nämlich für eine Vorderachse, Nachlaufachse und/oder Vorlaufachse des Kraftfahrzeugs.

16. Hydrauliksystem (H) nach Anspruch 15, **dadurch gekennzeichnet, dass** der Hilfsantrieb (1)
- Einzelradmotoren umfasst oder
- so ausgeführt ist, dass er über eine mechanische Antriebswelle zumindest zwei Fahrzeugräder antreibt.

17. Hydrauliksystem (H) nach Anspruch 15 oder 16, **dadurch gekennzeichnet, dass** die Übersetzung oder das Verhältnis der Drehzahl einer Hinterachse des Kraftfahrzeugs zu der Drehzahl der Pumpe (10) gleichbleibend ist, wenn der Hilfsantrieb (1) aktiviert ist.

18. Hydrauliksystem (H) nach Anspruch 15 oder 16, **dadurch gekennzeichnet, dass** die Übersetzung oder das Verhältnis der Drehzahl der Antriebsmaschine (5) des Kraftfahrzeugs zu der Drehzahl der Pumpe (10) gleichbleibend ist, wenn der Hilfsantrieb (1) aktiviert ist und die Pumpe (10) als Verstell-Pumpe ausgeführt ist.

19. Hydrauliksystem (H) nach einem der vorhergehenden Ansprüche, **dadurch gekennzeichnet, dass** eine Aktuatoreinrichtung (23) zur mechanischen, pneumatischen oder elektromechanischen Betätigung der Schutzkupplung (22) bereitgestellt ist, die von der elektronischen Steuereinheit (18) ansteuerbar ist.

20. Hydrauliksystem (H) nach einem der Ansprüche 1 bis 18, **dadurch gekennzeichnet, dass** die Schutzkupplung (22) rein mechanisch, ohne zusätzliche Aktuatoreinrichtung (23), bei Überschreiten einer unzulässigen Grenzdrehzahl auslöst und die Pumpe (10) dauerhaft von der Antriebsmaschine (5) trennt.

21. Hydrauliksystem (H) nach einem der vorhergehenden Ansprüche, **dadurch gekennzeichnet, dass** die Antriebsmaschine (5) zum Antreiben des Kraftfahrzeugs dient.

22. Hydrauliksystem (H) nach einem der vorhergehenden Ansprüche, **dadurch gekennzeichnet, dass** die Schutzkonfiguration so ausgeführt ist, dass ein Auslösen der Schutzkupplung (22) elektronisch erfasst und an die elektronische Steuereinheit (18) gemeldet wird.

23. Hydrauliksystem (H) nach einem der vorhergehenden Ansprüche, **dadurch gekennzeichnet, dass** die Schutzkonfiguration (III) so ausgeführt ist, dass dem Fahrzeugführer mitgeteilt wird, dass die Schutzkupplung (22) ausgelöst ist.

24. Nutzfahrzeug, mit einem Hydrauliksystem (H) nach einem der vorhergehenden Ansprüche.

## Claims

1. A hydraulic system (H) for a motor vehicle, specifically a utility vehicle, having a pump (10) which can be driven by means of a drive machine (5), and at least one functional device (1) which is fluidically connected to the pump (10), herein a protective configuration (III) comprising a protective coupling (22) is provided for protecting the pump (10) and/or the functional device (1), **characterized in that** the projective coupling (22) decouples the pump (10) from the drive machine (5) and/or blocks it in the uncoupled state if the rotational speed of the pump (10) reaches or exceeds a limiting rotational speed, and the protective coupling (22) is connected downstream of a clutch (7) which serves optionally to connect the pump (10) to the drive machine (5) or disconnect it from the drive machine (5).

2. The hydraulic system (H) according to Claim 1, **characterized in that** the pump (10) is embodied as a constant pump, specifically with an expulsion volume which is constant during operation.

3. The hydraulic system (H) according to one of the preceding claims, **characterized in that** the protective configuration has a detection unit (20) for detecting the rotational speed of the pump (10), and an electronic control unit (18) for carrying out a comparison between the detected rotational speed and a limiting rotational speed.

4. The hydraulic system (H) according to Claim 3, **characterized in that** the detection unit (20) detects the rotational speed of the pump (10) at the pump shaft and/or is mounted at least partially on the pump shaft.

5. The hydraulic system (H) according to Claim 3 or 4, **characterized in that** the detection unit (20) is designed to detect the rotational speed of the pump (10) continuously and to communicate it continuously to the control unit (18).

6. The hydraulic system (H) according to one of Claims 1 to 5, **characterized in that** the protective configuration (III) comprises a detection and/or control device (29) which serves to detect a pressure, pressure gradient and/or volume flow downstream of the pump (10), in order to be able to determine a rotational speed of the pump (10).

7. The hydraulic system (H) according to Claim 6, **characterized in that** the pressure, the pressure gradient and/or the volume flow are detected mechanically and/or electronically.

8. The hydraulic system (H) according to one of the preceding claims, **characterized in that** the protective configuration (III) is configured in such a way that after the safety criterion has been satisfied it acts hydro-mechanically directly on the protective coupling (22).

9. The hydraulic system (H) according to one of Claims 1 to 7, **characterized in that** the protective configuration (III) is embodied in such a way that after the safety criterion has been satisfied it acts electro-mechanically on an actuator (23) of the protective coupling (22) via an electronic control unit (18).

10. The hydraulic system (H) according to Claim 1 or to one of Claims 3 to 9, **characterized in that** the pump (10) is embodied as adjustable pump, with a displacement volume which can be adjusted during operation.

11. The hydraulic system (H) according to Claim 10, **characterized in that**, in the case of non-use of the functional device (1), the protective coupling (22) decouples the pump (10) from the drive machine (5) and/or blocks it in the uncoupled state, in order to prevent rotation of the pump (10) with at least virtually zero delivery and/or despite non-use of the functional device (1).

12. The hydraulic system (H) according to Claim 10 or 11, **characterized in that** the pump (10) is coupled to an interface of the drive machine (5).

13. The hydraulic system (H) according to one of the preceding claims, **characterized in that** the protective coupling (22) is connected upstream of the pump (10) and/or of the hydraulic system (H).

14. The hydraulic system (H) according to one of the preceding claims, **characterized in that** the protective coupling (22) is arranged between the drive machine (5) and the pump (10).

15. The hydraulic system (H) according to one of the preceding claims, **characterized in that** the functional device comprises an auxiliary drive (1) for the motor vehicle, specifically for a front axle, trailing axle and/or leading axle of the motor vehicle.

16. The hydraulic system (H) according to Claim 15, **characterized in that** the auxiliary drive (1) comprises one-wheel drives or is embodied in such a way that it drives at least two vehicle wheels via a mechanical drive shaft.

17. The hydraulic system (H) according to Claim 15 or 16, **characterized in that** the transmission ratio or the ratio of the rotational speed of a rear axle of the motor vehicle to the rotational speed of the pump (10) is constant if the auxiliary drive (1) is actuated.

18. The hydraulic system (H) according to Claim 15 or 16, characterize in that the transmission ratio or the ratio of the rotational speed of the drive machine (5) of the motor vehicle to the rotational speed of the pump (10) is constant if the auxiliary drive (1) is actuated and the pump (10) is embodied as an adjustable pump.

19. The hydraulic system (H) according to one of the preceding claims, **characterized in that** an actuator device (23) is made available for mechanically, pneumatically or electro-mechanically actuating the protective coupling (22), which actuator device (23) can be actuated by the electronic control unit (18).

20. The hydraulic system (H) according to one of Claims 1 to 18, **characterized in that** the protective coupling (22) triggers purely mechanically, without an additional actuator device (23), when an inadmissible limiting rotational speed is exceeded, and disconnects the pump (10) permanently from the drive machine (5).

21. The hydraulic system (H) according to one of the preceding claims, **characterized in that** the drive machine (5) serves to drive the motor vehicle.

22. The hydraulic system (H) according to one of the preceding claims, **characterized in that** the protective configuration is embodied in such a way that triggering of the protective coupling (22) is detected electronically and signalled to the electronic control unit (18).

23. The hydraulic system (H) according to one of the preceding claims, **characterized in that** the protective configuration (III) is embodied in such a way that the vehicle driver is informed that the protective coupling (22) has been triggered.

24. A utility vehicle having a hydraulic system (H) according to one of the preceding claims.

## Revendications

1. Système hydraulique (H) pour un véhicule à moteur, à savoir un véhicule utilitaire, avec une pompe (10), qui peut être entraînée par un moteur (5), et avec au moins un dispositif fonctionnel (1), qui est en liaison fluidique avec la pompe (10), dans lequel une configuration de protection (III) comprenant un embrayage de protection (22) est prévue pour la protection de la pompe (10) et/ou du dispositif fonctionnel (1), **caractérisé en ce que** l'embrayage de protection (22) découple la pompe (10) du moteur (5) et/ou la bloque dans l'état découplé, lorsque la vitesse de rotation de la pompe (10) atteint ou dépasse une vitesse de rotation limite, et l'embrayage de protection (22) est disposé en aval d'un embrayage (7), qui permet au choix de relier la pompe (10) au moteur (5) ou de la séparer du moteur (5).

2. Système hydraulique (H) selon la revendication 1, **caractérisé en ce que** la pompe (10) est réalisée sous forme de pompe à cylindrée constante, à savoir avec un volume de refoulement constant en fonctionnement.

3. Système hydraulique (H) selon l'une quelconque des revendications précédentes, **caractérisé en ce que** la configuration de protection présente une unité de détection (20) pour la détection de la vitesse de rotation de la pompe (10) et une unité de commande électronique (18) pour l'exécution d'une comparaison entre la vitesse de rotation détectée et une vitesse de rotation limite.

4. Système hydraulique (H) selon la revendication 3, **caractérisé en ce que** l'unité de détection (20) détecte la vitesse de rotation de la pompe (10) à l'arbre de la pompe et/ou est montée au moins en partie sur l'arbre de la pompe.

5. Système hydraulique (H) selon la revendication 3 ou 4, **caractérisé en ce que** l'unité de détection (20) est conçue pour détecter en continu la vitesse de rotation de la pompe (10) et pour la communiquer en continu à l'unité de commande (18).

6. Système hydraulique (H) selon l'une quelconque des revendications 1 à 5, **caractérisé en ce que** la configuration de protection (III) comprend un dispositif de détection et/ou de commande (29), qui permet de détecter une pression, un gradient de pression et/ou un courant volumique en aval de la pompe (10), afin de pouvoir en déduire une vitesse de rotation de la pompe (10).

7. Système hydraulique (H) selon la revendication 6, **caractérisé en ce que** la pression, le gradient de pression et/ou le courant volumique sont détectés par voie mécanique et/ou électronique.

8. Système hydraulique (H) selon l'une quelconque des revendications précédentes, **caractérisé en ce que** la configuration de protection (III) est conçue de façon à agir par voie hydromécanique directement sur l'embrayage de protection (22) lorsque le critère de sécurité est atteint.

9. Système hydraulique (H) selon l'une quelconque des revendications 1 à 7, **caractérisé en ce que** la configuration de protection (III) est conçue de façon à agir par voie électromécanique, indirectement via une unité de commande électronique (18), sur un actionneur (23) de l'embrayage de protection (22) lorsque le critère de sécurité est atteint.

10. Système hydraulique (H) selon la revendication 1 ou l'une quelconque des revendications 3 à 9, **caractérisé en ce que** la pompe (10) est réalisée sous forme de pompe à cylindrée variable, avec un volume d'aspiration variable en fonctionnement.

11. Système hydraulique (H) selon la revendication 10, **caractérisé en ce que** l'embrayage de protection (22) découple la pompe (10) du moteur (5) et/ou la bloque dans l'état découplé, en cas de non-utilisation du dispositif fonctionnel (1) afin d'empêcher une rotation de la pompe (10) avec un débit au moins pratiquement nul et/ou malgré la non-utilisation du dispositif fonctionnel (1).

12. Système hydraulique (H) selon la revendication 10 ou 11, **caractérisé en ce que** la pompe (10) est couplée à une interface du moteur (5).

13. Système hydraulique (H) selon l'une quelconque des revendications précédentes, **caractérisé en ce que** l'embrayage de protection (22) est monté en amont de la pompe (10) et/ou du système hydraulique (H).

14. Système hydraulique (H) selon l'une quelconque des revendications précédentes, **caractérisé en ce que** l'embrayage de protection (22) est disposé entre le moteur (5) et la pompe (10).

15. Système hydraulique (H) selon l'une quelconque des revendications précédentes, **caractérisé en ce que** le dispositif fonctionnel comprend un entraînement auxiliaire (1) pour le véhicule à moteur, à savoir pour une essieu avant, un essieu entraîné et/ou un double essieu reculé et/ou un double essieu avancé du véhicule à moteur.

16. Système hydraulique (H) selon la revendication 15, **caractérisé en ce que** l'entraînement auxiliaire (1)
- comprend des moteurs de roue individuels ou
- est configuré de façon à entraîner au moins deux roues du véhicule par un arbre d'entraînement mécanique.

17. Système hydraulique (H) selon la revendication 15 ou 16, **caractérisé en ce que** la démultiplication ou le rapport de la vitesse de rotation d'un essieu arrière du véhicule à moteur à la vitesse de rotation de la pompe (10) reste constant(e), lorsque l'entraînement auxiliaire (1) est activé.

18. Système hydraulique (H) selon la revendication 15 ou 16, **caractérisé en ce que** la démultiplication ou le rapport de la vitesse de rotation du moteur (5) du véhicule à moteur à la vitesse de rotation de la pompe (10) reste constant(e), lorsque l'entraînement auxiliaire (1) est activé et que la pompe (10) est réalisée sous forme de pompe à cylindrée variable.

19. Système hydraulique (H) selon l'une quelconque des revendications précédentes, **caractérisé en ce qu'**il se trouve un dispositif d'actionneur (23) pour l'actionnement mécanique, pneumatique ou électro-mécanique de l'embrayage de protection (22), qui peut être commandé par l'unité de commande électronique (18).

20. Système hydraulique (H) selon l'une quelconque des revendications 1 à 18, **caractérisé en ce que** l'embrayage de protection (22) débraye de façon purement mécanique, sans dispositif d'actionnement supplémentaire (23), en cas de dépassement d'une vitesse de rotation limite inacceptable, et sépare durablement la pompe (10) du moteur (5).

21. Système hydraulique (H) selon l'une quelconque des revendications précédentes, **caractérisé en ce que** le moteur (5) est destiné à l'entraînement du véhicule à moteur.

22. Système hydraulique (H) selon l'une quelconque des revendications précédentes, **caractérisé en ce que** la configuration de protection est conçue de façon à détecter électroniquement un déclenchement de l'embrayage de protection (22) et à le signaler à l'unité de commande électronique (18).

23. Système hydraulique (H) selon l'une quelconque des revendications précédentes, **caractérisé en ce que** la configuration de protection (III) est conçue de façon à faire savoir au conducteur du véhicule que l'embrayage de protection (22) est déclenché.

24. Véhicule utilitaire, avec un système hydraulique (H) selon l'une quelconque des revendications précédentes.
